(19) Europäisches Patentamt / European Patent Office / Office européen des brevets

(11) **EP 2 746 813 B1**

(12) **EUROPEAN PATENT SPECIFICATION**

(45) Date of publication and mention
of the grant of the patent:
**23.08.2017 Bulletin 2017/34**

(51) Int Cl.:
***G01S 19/21*** *(2010.01)*

(21) Application number: **12008536.0**

(22) Date of filing: **21.12.2012**

(54) **Detection of spoofing of GNSS navigation signals**

Erkennung des Spoofings von GNSS-Navigationssignalen

Détection de mystification des signaux de navigation GNSS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.06.2014 Bulletin 2014/26**

(73) Proprietor: **Astrium GmbH
82024 Taufkirchen (DE)**

(72) Inventor: **Mink, Michael
D-81671 München (DE)**

(74) Representative: **Frenkel, Matthias Alexander et al
Wuesthoff & Wuesthoff
Patentanwälte PartG mbB
Schweigerstrasse 2
81541 München (DE)**

(56) References cited:
**US-A1- 2009 195 443**

• **MARK L PSIAKI ET AL: "Civilian GPS Spoofing
Detection based on Dual-Receiver Correlation of
Military Signals", GNSS 2011 - PROCEEDINGS OF
THE 24TH INTERNATIONAL TECHNICAL
MEETING OF THE SATELLITE DIVISION OF THE
INSTITUTE OF NAVIGATION (ION GNSS 2011),
THE INSTITUTE OF NAVIGATION, 8551 RIXLEW
LANE SUITE 360 MANASSAS, VA 20109, USA, 23
September 2011 (2011-09-23), page 2619,
XP056000626,**

• **KYLE D WESSON ET AL: "A Proposed Navigation
Message Authentication Implementation for Civil
GPS Anti-Spoofing", GNSS 2011 -
PROCEEDINGS OF THE 24TH INTERNATIONAL
TECHNICAL MEETING OF THE SATELLITE
DIVISION OF THE INSTITUTE OF NAVIGATION
(ION GNSS 2011), THE INSTITUTE OF
NAVIGATION, 8551 RIXLEW LANE SUITE 360
MANASSAS, VA 20109, USA, 23 September 2011
(2011-09-23), page 3129, XP056000680,**

• **O'HANLON B W ET AL: "Real-Time Spoofing
Detection in a Narrow-Band Civil GPS Receiver",
GNSS 2010 - PROCEEDINGS OF THE 23RD
INTERNATIONAL TECHNICAL MEETING OF THE
SATELLITE DIVISION OF THE INSTITUTE OF
NAVIGATION (ION GNSS 2010), THE INSTITUTE
OF NAVIGATION, 8551 RIXLEW LANE SUITE 360
MANASSAS, VA 20109, USA, 24 September 2010
(2010-09-24), pages 2211-2220, XP056000332,**

• **K. WESSON ET AL: "Practical Cryptographic Civil
GPS Signal Authentication", NAVIGATION, vol.
59, no. 3, 1 September 2012 (2012-09-01), pages
177-193, XP055048538, ISSN: 0028-1522, DOI:
10.1002/navi.14**

**Description**

TECHNICAL FIELD

The invention relates to detecting of spoofing of GNSS navigation signals.

BACKGROUND

Users of a GNSS (Global Navigation Satellite System) rely on correct navigation signals in order to be able to accurately determine their position (positioning). However, accurate GNSS based positioning and navigation can be distorted by spoofing, which comprises the generation of genuine-looking GNSS navigation signals with misleading navigation information to make a user receiver provide a wrong position, while on the other hand preventing the use of GNSS broadcasts.

A further distortion method is "meaconing", which serves to confuse positioning and navigation by intercepting navigation signals and rebroadcasting them at the reception frequency. Meaconing stations cause inaccurate bearings to be obtained by aircraft or ground stations. For this kind of attack the adversary receives GNSS navigation signals and re-broadcasts those using signal strength above the original GNSS signal to cause the target receiver to lock onto that signal.

The intention of spoofing and meaconing is to mislead the user by causing the user receiver to determine wrong position and timing solutions. As the user may still experience that the GNSS service is available, this is considered to be a higher threat than the pure non-availability of service caused by a jamming attack.

Distorted positioning and navigation due to spoofing and meaconing can be avoided by authentication of GNSS navigation signals, which is an important aspect for GNSS services requiring a certain level of trust. This includes the confirmation that the pretended source of a GNSS signal and the data content can be identified, and correspond to the true identity of that source.

There are several methods to authenticate GNSS navigation signals. The most promising approach is based on phase difference monitoring. Phase observations are differenced between two antennas and one satellite (single difference). Using single differences a common clock reference is mandatory as the effect of the difference of both receiver clocks superpose the single differences. Specific hardware is required either a common time reference for both receivers or one receiver which handles input from two antennas. Therefore this approach did not get over some scientific tests.

In the publication Montgomery, P. et al (2009): "A Multi-Antenna Defense - Receiver Autonomous GPS Spoofing Detection", Inside GNSS, http://www.insidegnss.com, March/April 2009, an approach is introduced which performs a so-called angle-of-arrival detection. This requires an absolute orientation of the two antennas in use which is already determined in advance. This approach is based on the use of a common time reference and on phase single differences (differences between 2 antennas and one receiver). By comparing the expected phase differences based on actual satellite positions and absolute orientation of the antennas with the actual measured phase differences, the algorithm decides whether there are original or faked GNSS navigation signals. If both phase differences are (almost) the same there is with a high probability no presence of spoofing. To avoid the estimation of the additional absolute orientation parameters, the authors of the above publication suggest reducing this approach to spoofing detection based on the characteristics of the phase differences and not on an angle-of-arrival detection method.

The publication "Civilian GPS Spoofing Detection based on Dual-Receiver Correlation of Military Signals", MARK L PSIAKI ET AL, GNSS 2011 - PROCEEDINGS OF THE 24TH INTERNATIONAL TECHNICAL MEETING OF THE SATELLITE DIVISION OF THE INSTITUTE OF NAVIGATION (ION GNSS 2011), THE INSTITUTE OF NAVIGATION, 8551 RIXLEW LANE SUITE 360 MANASSAS, VA 20109, USA, 23 September 2011 (2011-09-23), page 2619, XP056000626, describes two spoofing detection methods, which have been developed for open-source/civilian GNSS signals. The developed methods rely on the presence of an encrypted/military signal on the same transmitted frequency and on knowledge of the timing and carrier-phase relationship of the encrypted signal to the open-source signal. The open-source signal is tracked in a secure reference receiver and in a defended receiver that might be the victim of a spoofing attack. The open-source tracking data are used to isolate the part of the received signal that is encrypted. The encrypted parts of the signals from the two receivers are cross-correlated after being brought together via a communications link. This use of cross-correlation obviates the need for a priori knowledge of the PRN code of the encrypted signal. If a high cross-correlation statistic is obtained, then no spoofing has been detected because this large value indicates the presence of the encrypted signal in both receivers. If the cross-correlation statistic is too low, then a spoofing alert is issued.

United states patent publication US2009/195443A1 relates to global positioning, and more particularly to the issue of confidence that a user has in global positioning information that equipment may provide. A signal signal$_A$ that is provided as having been received from a source at a first global location is authenticated by comparing it to a signal signal$_B$ that is received from the source at a second global location, wherein signal$_B$ contains an unknown signal that is unique to the source, and determining that signal$_A$ contains the same unknown signal that is contained in signal$_B$.

## SUMMARY OF INVENTION

It is an object of the invention to provide an improved detecting of spoofing of GNSS navigation signals.

This object is achieved by the subject matter of the independent claims. Further embodiments are shown by the dependent claims.

An approach of the invention is based on double differences (phase differences between two receivers and two satellites) phase monitoring which makes it independent of the influence of the receiver clocks. The inventive approach enables detection spoofing on a much wider spectrum of applications as no specific hardware is required. Just combining two different receivers each equipped with one antenna able to observe the GNSS phase measurements will deliver a reliable statement about the presence of spoofing in real-time. The requirements for the hardware are relaxed in a way that every receiver-antenna configuration capable of observing phase measurements can be used. The inventive approach is not even restricted to using the same equipment two times but two different types of receivers or antennas can be used. It will be required an apparatus to combine the phase observations of both receivers and then to calculate double differences. Alternatively a simple connection, for example a bluetooth connection, can be established in order to share the data from both receivers. The double differencing calculation can be simply done in one of the two receivers. A further advantage of the inventive approach is the capability of spoofing detection in real-time (snapshot).

An embodiment of the invention relates to a method for detecting spoofing of GNSS navigation signals comprising the acts of: receiving navigation signals from a first GNSS satellite and from a second GNSS satellite with a first antenna and a first receiver; receiving navigation signals from the first GNSS satellite and from the second GNSS satellite with a second antenna and a second receiver; measuring carrier phase differences $\Delta(\phi)$ of the received navigation signals; calculating phase double differences $\nabla\Delta(\phi)$ from the measured carrier phase differences $\Delta(\phi)$ ; calculating a test statistic from all calculated phase double differences; checking whether the test statistic remains in a range defined by two thresholds over a predefined time period ; and detecting spoofing if the test statistic remains in the range defined by the two thresholds during the predefined time period.

The phase double differences can be calculated from the measured phase differences according to the following double difference equation:

$$\nabla\Delta_{i,j}^{k,l}(t) = \Delta_i^{k,l}(t) - \Delta_j^{k,l}(t) = (\Delta_i^k(t) - \Delta_i^l(t)) - (\Delta_j^k(t) - \Delta_j^l(t))$$

wherein i and j denote the first and second receiver and k and l denote the first and second GNSS satellite, and wherein double differences are calculated for every time epoch t.

The test statistic may be a function of the phase double differences and calculated as modulo of the phase differences according to the following equation:

$$test\_stat = \mathrm{mod}(\nabla\Delta(\phi), 1cycle).$$

The method may further comprise the act of defining the two thresholds for the test statistic, which define the range.

The defining of two thresholds for the test statistic may comprise defining a threshold and calculating a first threshold and a second threshold from the defined threshold as the two thresholds according to the following equation:

$$\frac{threshold}{2} = threshold_1 = 1 - threshold_2$$

with $threshold_1 < threshold_2$.

The value 0.4 may be defined as the threshold so that the first threshold is calculated as 0.2 and the second threshold is calculated as 0.8.

The checking whether the test statistic remains in the range defined by the two thresholds over a predefined time period may comprise continuously comparing the test statistic with the first threshold and with the second threshold during the predefined time period and raising a flag if the test statistic is larger than the first threshold or smaller than the second threshold.

Spoofing may be detected if no flag is raised during the predefined time period.

A further embodiment of the invention relates to a computer program, which implements a method according to the invention and as described herein and enabling detecting spoofing of GNSS navigation signals when executed by a computer.

According to a further embodiment of the invention, a record carrier storing a computer program according to the invention may be provided, for example a CD-ROM, a DVD, a memory card, a diskette, or a similar data carrier suitable to store the computer program for electronic access.

A further embodiment of the invention relates to a computer being configured by a computer program of the invention and as described herein for detecting spoofing of GNSS navigation signals.

A further embodiment of the invention relates to a device for detecting spoofing of GNSS navigation signals comprising

first means for calculating phase double differences $\nabla\Delta(\phi)$ from measured carrier phase differences $\Delta(\phi)$ of navigation signals received from a first GNSS satellite and from a second GNSS satellite with a first antenna and a first receiver and with a second antenna and a second receiver;

second means for calculating a test statistic from all calculated phase double differences;

third means for checking whether the test statistic remains in a range defined by two thresholds defined for the test statistic over a predefined time period; and

fourth means for detecting spoofing if the test statistic remains in the range defined by the two thresholds during the predefined time period.

The device may be implemented a separate external data processing facility, which is adapted to receive measured carrier phase differences $\Delta(\phi)$ from the first receiver and the second receiver via a bi-directional communication link and to send back to the first and second receiver a flag that states about the presence of spoofing.

The device may also be implemented as processing module, which is adapted to receive measured carrier phase differences $\Delta(\phi)$ of navigation signals from at least two receivers for navigation signals from GNSS satellites and to output a flag states about the presence of spoofing.

A yet further embodiment of the invention relates to a receiver for navigation signals from GNSS satellites, comprising a device of the invention and as described herein and being further adapted to receive from another receiver measured carrier phase differences $\Delta(\phi)$ via a bi-directional communication link and to send back to the other receiver a flag that states about the presence of spoofing.

These and other aspects of the invention will be apparent from and elucidated with reference to the embodiments described hereinafter.

The invention will be described in more detail hereinafter with reference to exemplary embodiments. However, the invention is not limited to these exemplary embodiments.

BRIEF DESCRIPTION OF DRAWINGS

Fig. 1     shows a flowchart of an embodiment of a method for detecting spoofing of GNSS navigation signals according to the invention;

Fig. 2     shows an example of test statistics for the case of authentic navigation signals;

Fig. 3     shows an example of test statistics for the case of spoofed navigation signals;

Fig. 4     shows a block diagram of an embodiment of a device for detecting spoofing of GNSS navigation signals according to the invention; and

Fig. 5     shows an example of a testing setup to simulate a spoofing scenario.

DESCRIPTION OF EMBODIMENTS

In the following, functionally similar or identical elements may have the same reference numerals.

This inventive approach of spoofing detection of GNSS navigation signals is based on the one described in the the publication Montgomery, P. et al (2009): "A Multi-Antenna Defense - Receiver Autonomous GPS Spoofing Detection", Inside GNSS, http://www.insidegnss.com, March/April 2009, and can be seen as a further development of it. One strong disadvantage of the latter approach is the fact that two antennas must correspond to the same time reference which brings along specific hardware complexity. Or one receiver would need to handle phase observations coming from two antennas. The reason is that the approach is based on single differences that do not compensate for the influence of the difference of the two receiver clocks.

Phase single difference -calculated from observations coming from one satellite and two receivers - are affected of the receiver clocks that superpose the single differences.

The introduction of so-called double differences according to the invention takes care of this problem as the influence of the receiver clocks gets eliminated by calculating phase double differences. This brings along several additional advantages namely the possibility of using phase observations of two independent receiver-antenna systems. Always considering that both antennas are affected by the same spoofing source this approach works independently of the baseline length.

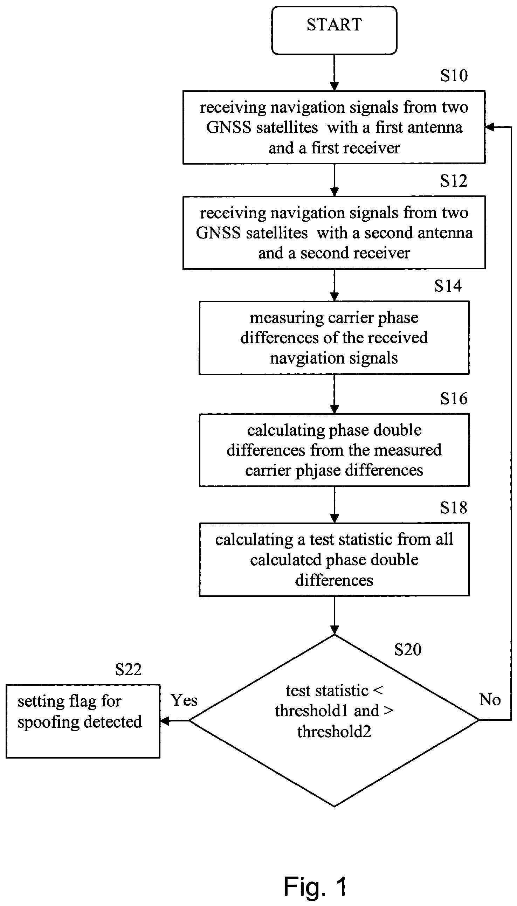

Fig. 1 shows a flowchart of a method for detecting spoofing of GNSS navigation signals according to the invention. In step S10, navigation signals from two GNSS satellites k, I are received with a first antenna and a first receiver i coupled to the first antenna. In step S12, navigation signals from the same two GNSS satellites k, I are received with a second antenna and a second receiver j coupled to the second antenna. Thus, each receiver i and j has received navigation signals from the same two GNSS satellites k, I. In step S14, carrier phase differences of the navigation signals received with each receiver are measured, i.e. carrier phase differences $\Delta$ of the navigation signals received with the first receiver i and carrier phase differences $\Delta$ of the navigation signals received with the second receiver j are measured so that two sets of measured carrier phase differences $\Delta_i^{k,l}(t)$ and $\Delta_j^{k,l}(t)$ are obtained.

From these carrier phase differences, phase double differences are calculated in step S16. The double difference equation applied according to the invention is schematically pointed out here to show how the double differences are calculated.

$$\nabla\Delta_{i,j}^{k,l}(t) = \Delta_i^{k,l}(t) - \Delta_j^{k,l}(t) = (\Delta_i^k(t) - \Delta_i^l(t)) - (\Delta_j^k(t) - \Delta_j^l(t))$$

Double differences are calculated for every time epoch t.

In the following step S18, a test statistic is calculated from all phase double differences, which were calculated in step S16. The test statistic defined here is a function of the phase double differences. Calculating the modulo of the phase differences will lead to the test statistic:

$$test\_stat = \mathrm{mod}(\nabla\Delta(\phi), 1cycle)$$

As a consequence, the test statistic *test_stat* ranges between 0 and 1. A threshold is defined that is symmetric to zero.

$$\frac{threshold}{2} = threshold_1 = 1 - threshold_2$$

$$threshold_1 < threshold_2$$

The test statistic is very sensitive to the motion of the signal source which corresponds to a change of the test statistic over time. In case of spoofing the test statistic will remain between the borders defined by the two thresholds (*threshold₁* and *threshold₂*).

To decide this, in step S20 the test statistic of all double difference combinations are checked whether they remain in the range defined by the thresholds.

$$spoofing \begin{cases} test\_stat < threshold_1 \\ test\_stat > threshold_2 \end{cases}$$

If the test statistic is smaller than *threshold₁* and at the same time the test statistic larger than *threshold₂* the presence of spoofing can be assumed with high probability. Then, in step S22 a flag for "spoofing detected" can be set and output for further processing.

Typical values for the thresholds are 0.2 for *threshold₁* and 0.8 for *threshold₂*.

The probability that this criterion is true although all signals are authentic and therefore a false alert is raised has shown to be negligible.

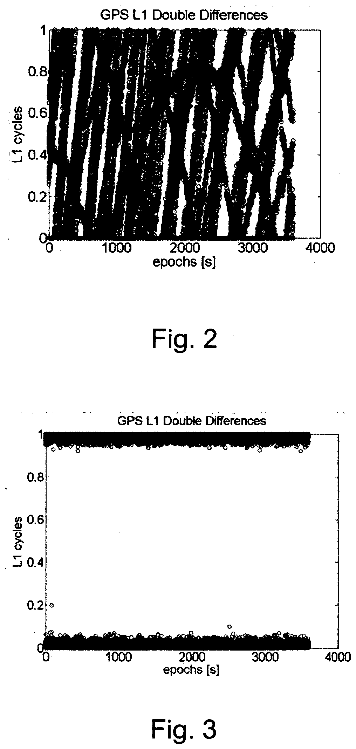

In Fig. 2, a typical test statistic is plotted for the case of authentic GNSS navigation signals. Fig. 3 shows a plot with a typical test statistic for the case of spoofed GNSS navigation signals.

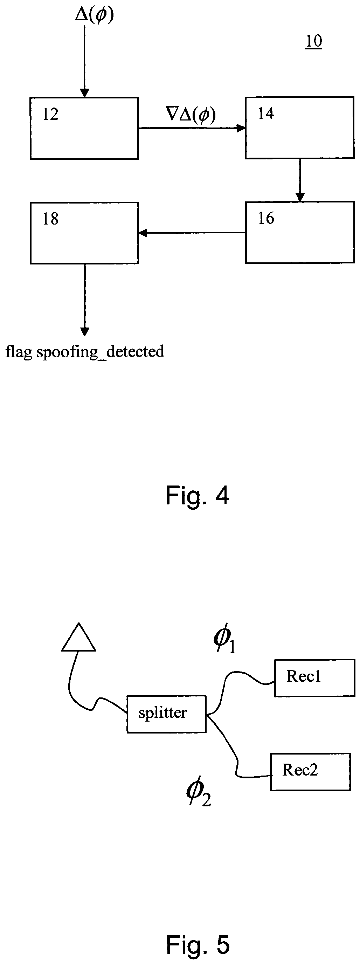

Fig. 4 shows a block diagram of a device 10 for detecting spoofing of GNSS navigation signals. First means 12 receive carrier phase differences of navigation signals and calculate phase double differences from the received carrier phase differences. The received carrier phase differences were measured as described above by two receiver/antenna combinations i and j, each receiving GNSS navigation signals from two GNSS satellites k and I. Second means 14 calculate a test statistic as described above from all calculated phase double differences. Third means 16 check whether the test statistic remains in a range defined by two thresholds defined for the test statistic over a predefined time period. Fourth means 18 detect spoofing if the test statistic remains in the range defined by the two thresholds during the predefined time period. All means 12 to 18 can be implemented in hard- and/or software. For example, the means can be implemented in hardware as an ASIC (Application Specific Integrated Circuit) or a (F)PGA ((Field) Programable Gate Array). Another implementation is a general purpose microprocessor or microcontroller or digital signal processor, which are configured by a firmware to implement the means 12 to 18 and to form the device 10. The device 10 can either be implemented as stand-alone or separate device independent from the receivers from the GNSS navigation signals, or it can be integrated in a GNSS navigation signal receiver.

An experimental hardware setup is briefly described in the following. Both GNSS navigation signal receivers perform phase observations or measurements with the received GNSS navigation signals. Merging the phase observations of the two or more antenna-receiver systems can be accomplished as outlined below.

The object is how to bring the data from both receivers together in order to calculate the double differences and hence to decide whether spoofing is present or not. Several options according to the invention are discussed below.

Both receivers could send their observation data separately to an external data processing facility (EDPF) using a communication link like GSM for example. This would require a bi-directional communication link as the EDPF receives observation data permanently and would need to send back to each user a flag that states about the presence of spoofing.

Another option would be to calculate the double differences in one of the two receivers. This requires only one receiver to send its data via a communication link (for example via cable or radio such as a Bluetooth communication link) to the other receiver. The advantage is the calculation is on a receiver internal basis which does not require any external computational resources.

An algorithm implementing the method according to the invention only needs to be performed on one receiver because the result is valid for both receivers. As the algorithm is based on the input from both receivers they are closely correlated. Hence only two results are possible namely both receivers are spoofed or both receivers are not spoofed.

To provide redundancy both receivers could provide each other with their observation data respectively. This increases the reliability of the method and the availability of the result. This method is the very economic and practical.

A processing module can be implemented which is able to receive phase observation data from an external receiver via a communication link (for example Bluetooth) permanently and then to process its own observation data and the external observation data to decide whether spoofing is present or not.

Fig. 5 shows a testing setup for meaconing - immediate re-broadcast. The hardware setup to simulate a spoofing scenario can be as follows: the setup simulates a spoofing scenario because both GNSS navigation signal receivers Rec1 and Rec2 are receiving phase observation data from the same antenna via cables with different lengths. Hence both receivers get observations from the same source. The signal source can be a constellation simulator (Spirent STR4500 GPS L1 Constellation Simulator) which is directly connected via an antenna splitter to the receivers. Having the same signal source the phase difference remains constant over time and hence simulates a spoofing scenario.

REFERENCE NUMERALS

| | |
|---|---|
| 10 | GNSS navigation signals spoofing detector device |
| 12 | phase double differences calculating means |
| 14 | test statistic calculating means |
| 16 | test statistic checking means |
| 18 | spoofing detecting means |

**Claims**

1. Method for detecting spoofing of GNSS navigation signals comprising the acts of:

    - receiving navigation signals from a first GNSS satellite and from a second GNSS satellite with a first antenna and a first receiver (S10);
    - receiving navigation signals from the first GNSS satellite and from the second GNSS satellite with a second antenna and a second receiver (S12);
    - measuring carrier phase differences $\Delta(\phi)$ of the received navigation signals (S14);
    - calculating phase double differences $\nabla\Delta(\phi)$ from the measured carrier phase differences $\Delta(\phi)$ (S16);
    - calculating a test statistic from all calculated phase double differences (S18);
    - checking whether the test statistic remains in a range defined by two thresholds over a predefined time period (S20); and
    - detecting spoofing if the test statistic remains in the range defined by the two thresholds during the predefined time period (S22).

2. The method of claim 1, wherein the phase double differences are calculated from the measured phase differences according to the following double difference equation:

$$\nabla\Delta_{i,j}^{k,l}(t) = \Delta_i^{k,l}(t) - \Delta_j^{k,l}(t) = (\Delta_i^k(t) - \Delta_i^l(t)) - (\Delta_j^k(t) - \Delta_j^l(t))$$

    wherein i and j denote the first and second receiver and k and l denote the first and second GNSS satellite, and wherein double differences are calculated for every time epoch t.

3. The method of claim 1 or 2, wherein the test statistic is a function of the phase double differences and calculated as modulo of the phase differences according to the following equation:

$$test\_stat = \mathrm{mod}(\nabla\Delta(\phi), 1 cycle).$$

4. The method of claim 1, 2 or 3, further comprising the act of defining the two thresholds for the test statistic, which define the range.

5. The method of claim 4, wherein the defining of two thresholds for the test statistic comprises defining a threshold and calculating a first threshold and a second threshold from the defined threshold as the two thresholds according to the following equation:

$$\frac{threshold}{2} = threshold_1 = 1 - threshold_2$$

    with $threshold_1 < threshold_2$.

6. The method of claim 5, wherein 0.4 is defined as the threshold so that the first threshold is calculated as 0.2 and the second threshold is calculated as 0.8.

7. The method of claim 4, 5 or 6, wherein the checking whether the test statistic remains in the range defined by the two thresholds over a predefined time period comprises

    - continuously comparing the test statistic with the first threshold and with the second threshold during the predefined time period and
    - raising a flag if the test statistic is larger than the first threshold or smaller than the second threshold.

8. The method of claim 7, wherein spoofing is detected if no flag is raised during the predefined time period.

9. A computer program which when it runs on a computer is configured to implement a method of any of the claims 1 to 8.

10. A record carrier storing a computer program according to claim 9.

11. A computer being configured by a computer program of claim 9 for detecting spoofing of GNSS navigation signals.

12. A device (10) for detecting spoofing of GNSS navigation signals comprising

- first means (12) configured to calculate phase double differences $\nabla\Delta(\phi)$ from measured carrier phase differences $\Delta(\phi)$ of navigation signals received from a first GNSS satellite and from a second GNSS satellite with a first antenna and a first receiver and with a second antenna and a second receiver;
- second means (14) configured to calculate a test statistic from all calculated phase double differences;
- third means (16) configured to check whether the test statistic remains in a range defined by two thresholds defined for the test statistic over a predefined time period; and
- fourth means (18) configured to detect spoofing if the test statistic remains in the range defined by the two thresholds during the predefined time period.

13. The device of claim 12 being implemented a separate external data processing facility, which is adapted to receive measured carrier phase differences $\Delta(\phi)$ from the first receiver and the second receiver via a bi-directional communication link and to send back to the first and second receiver a flag that states about the presence of spoofing.

14. The device of claim 12 being implemented as processing module, which is adapted to receive measured carrier phase differences $\Delta(\phi)$ of navigation signals from at least two receivers for navigation signals from GNSS satellites and to output a flag states about the presence of spoofing.

**Patentansprüche**

1. Verfahren zum Detektieren eines Spoofings von GNSS-Navigationssignalen, umfassend folgende Schritte:

- Empfangen von Navigationssignalen von einem ersten GNSS-Satelliten und von einem zweiten GNSS-Satelliten mit einer ersten Antenne und einem ersten Empfänger (S10);
- Empfangen von Navigationssignalen von dem ersten GNSS-Satelliten und von dem zweiten GNSS-Satelliten mit einer zweiten Antenne und einem zweiten Empfänger (S12);
- Messen von Trägerphasendifferenzen $\Delta(\varnothing)$ der empfangenen Navigationssignale (S14);
- Berechnen von Phasendoppeldifferenzen $\nabla\Delta(\varnothing)$ aus den gemessenen Trägerphasendifferenzen $\Delta(\varnothing)$ (S16);
- Berechnen einer Testgröße aus allen berechneten Phasendoppeldifferenzen (S18);
- Überprüfen, ob die Testgröße in einem Bereich, der durch zwei Schwellen definiert ist, während eines vordefinierten Zeitraums bleibt (S20); und
- Detektieren eines Spoofings, falls die Testgröße in dem Bereich, der durch die beiden Schwellen definiert wird, während des vordefinierten Zeitraums bleibt (S22).

2. Verfahren nach Anspruch 1, wobei die Phasendoppeldifferenzen aus den gemessenen Phasendifferenzen gemäß der folgenden Doppeldifferenzgleichung berechnet werden:

$$\nabla\Delta_{i,j}^{k,l}(t) = \Delta_i^{k,l}(t) - \Delta_j^{k,l}(t) = \left(\Delta_i^k(t) - \Delta_i^l(t)\right) - \left(\Delta_j^k(t) - \Delta_j^l(t)\right)$$

wobei i und j die ersten und zweiten Empfänger bezeichnen und k und l die ersten und zweiten GNSS-Satelliten bezeichnen, und wobei Doppeldifferenzen für jede Zeitepoche t berechnet werden.

3. Verfahren nach Anspruch 1 oder 2, wobei die Testgröße eine Funktion der Phasendoppeldifferenzen ist und als Modulo der Phasendifferenzen gemäß der folgenden Gleichung berechnet wird:

$$test\_stat = \mathrm{mod}(\nabla\Delta(\phi), 1cycle).$$

4. Verfahren nach Anspruch 1, 2 oder 3, ferner umfassend den Schritt des Definierens der beiden Schwellen für die Testgröße, die den Bereich definieren.

5. Verfahren nach Anspruch 4, wobei das Definieren der beiden Schwellen für die Testgröße das Definieren einer Schwelle und das Berechnen einer ersten Schwelle und einer zweiten Schwelle aus der definierten Schwelle als die beiden Schwellen gemäß der folgenden Gleichung umfasst:

$$\frac{Schwelle}{2} = \text{Schwelle}_1 = 1\text{-Schwelle}_2,$$

wobei $\text{Schwelle}_1 < \text{Schwelle}_2$.

6. Verfahren nach Anspruch 5, wobei 0,4 als die Schwelle definiert ist, so dass die erste Schwelle mit 0,2 berechnet wird und die zweite Schwelle mit 0,8 berechnet wird.

7. Verfahren nach Anspruch 4, 5 oder 6, wobei das Überprüfen, ob die Testgröße in dem Bereich, der durch die beiden Schwellen definiert ist, während eines vordefinierten Zeitraums bleibt, folgende Schritte umfasst

   - ständiges Vergleichen der Testgröße mit der ersten Schwelle und mit der zweiten Schwelle während des vordefinierten Zeitraums, und
   - Setzen eines Flags, falls die Testgröße größer als die erste Schwelle oder kleiner als die zweite Schwelle ist.

8. Verfahren nach Anspruch 7, wobei ein Spoofing detektiert wird, falls kein Flag während des vordefinierten Zeitraums gesetzt wird.

9. Computerprogramm, das, wenn es auf einem Computer abläuft, konfiguriert ist, um ein Verfahren nach einem der Ansprüche 1 bis 8 umzusetzen.

10. Datensatzträger, der ein Computerprogramm nach Anspruch 9 speichert.

11. Computer, der durch ein Computerprogramm nach Anspruch 9 konfiguriert ist, um ein Spoofing von GNSS-Navigationssignalen zu detektieren.

12. Vorrichtung (10) zum Detektieren eines Spoofings von GNSS-Navigationssignalen, umfassend

   - erste Mittel (12), die konfiguriert sind, um Phasendoppeldifferenzen $\nabla\Delta(\emptyset)$ aus den gemessenen Trägerphasendifferenzen $\Delta(\emptyset)$ von Navigationssignalen zu berechnen, die von einem ersten GNSS-Satelliten und von einem zweiten GNSS-Satelliten mit einer ersten Antenne und einem ersten Empfänger und mit einer zweiten Antenne und einem zweiten Empfänger empfangen werden;
   - zweite Mittel (14), die konfiguriert sind, um eine Testgröße aus allen berechneten Phasendoppeldifferenzen zu berechnen;
   - dritte Mittel (16), die konfiguriert sind, um zu überprüfen, ob die Testgröße in einem Bereich, der durch zwei Schwellen definiert ist, während eines vordefinierten Zeitraums bleibt; und
   - vierte Mittel (18), die konfiguriert sind, um ein Spoofing zu detektieren, falls die Testgröße in dem Bereich, der durch die beiden Schwellen definiert ist, während des vordefinierten Zeitraums bleibt.

13. Vorrichtung nach Anspruch 12, die als getrennte externe Datenverarbeitungsvorrichtung umgesetzt ist, die geeignet ist, um gemessene Trägerphasendifferenzen $\Delta(\emptyset)$ von dem ersten Empfänger und dem zweiten Empfänger über eine bidirektionale Kommunikationsleitung zu empfangen und an den ersten und zweiten Empfänger ein Flag zurück zu senden, welches das Vorliegen eines Spoofings angibt.

14. Vorrichtung nach Anspruch 12, die als Verarbeitungsmodul umgesetzt ist, das geeignet ist, um gemessene Trägerphasendifferenzen $\Delta(\emptyset)$ der Navigationssignale von mindestens zwei Empfängern für Navigationssignale von GNSS-Signalen zu empfangen und einen Flag, welches das Vorliegen eines Spoofings angibt, auszugeben.

**Revendications**

1. Procédé pour détecter une mystification de signaux de navigation de système mondial de navigation par satellite, GNSS, comprenant les actions consistant à :

   - recevoir des signaux de navigation en provenance d'un premier satellite de GNSS et en provenance d'un second satellite de GNSS avec une première antenne et un premier récepteur ($S_{10}$) ;
   - recevoir des signaux de navigation en provenance du premier satellite de GNSS et du second satellite de GNSS avec une seconde antenne et un second récepteur (S12) ;
   - mesurer des différences de phase de porteuse $\Delta(\phi)$ des signaux de navigation reçus (S14) ;
   - calculer des différences doubles de phase $\nabla\Delta(\phi)$ à partir des différences de phase de porteuse mesurées $\Delta(\phi)$ (S16) ;
   - calculer une statistique de test à partir de toutes les différences doubles de phase calculées (S18) ;
   - vérifier si la statistique de test reste ou non dans une plage définie par deux seuils sur une période de temps prédéfinie (S20) ; et
   - détecter une mystification si la statistique de test reste dans la plage définie par les deux seuils pendant la période de temps prédéfinie (S22).

2. Procédé selon la revendication 1, dans lequel les différences doubles de phase sont calculées à partir des différences de phase mesurées selon l'équation de différence double suivante :

$$\nabla\Delta_{i,j}^{k,l}(t) = \Delta_i^{k,l}(t) - \Delta_j^{k,l}(t) = (\Delta_i^k(t) - \Delta_i^l(t)) - (\Delta_j^k(t) - \Delta_j^l(t))$$

   où i et j désignent les premier et second récepteurs et k et l désignent les premier et second satellites de GNSS, et où des différences doubles sont calculées pour chaque époque de temps t.

3. Procédé selon la revendication 1 ou 2, dans lequel la statistique de test est une fonction des différences doubles de phase et calculée en tant que modulo des différences de phase selon l'équation suivante :

$$test\_stat = \mathrm{mod}(\, \nabla\Delta(\phi)\, ,\, 1\, cycle).$$

4. Procédé selon la revendication 1, 2 ou 3, comprenant en outre l'action consistant à définir les deux seuils pour la statistique de test, qui définissent la plage.

5. Procédé selon la revendication 4, dans lequel la définition de deux seuils pour la statistique de test comprend la définition d'un seuil et le calcul d'un premier seuil et d'un second seuil à partir du seuil défini comme les deux seuils selon l'équation suivante :

$$\frac{seuil}{2} = seuil_1 = 1 - seuil_2$$

   avec $seuil_1 < seuil_2$.

6. Procédé selon la revendication 5, dans lequel 0,4 est défini comme le seuil de telle sorte que le premier seuil est calculé comme 0,2 et le second seuil est calculé comme 0,8.

7. Procédé selon la revendication 4, 5 ou 6, dans lequel la vérification du point de savoir si la statistique de test reste ou non dans la plage définie par les deux seuils sur une période de temps prédéfinie consiste à :

   - comparer de manière continue la statistique de test avec le premier seuil et avec le second seuil pendant la période de temps prédéfinie ; et
   - lever un drapeau si la statistique de test est supérieure au premier seuil ou inférieure au second seuil.

8. Procédé selon la revendication 7, dans lequel une mystification est détectée si aucun fanion n'est levé pendant la période de temps prédéfinie.

9. Programme d'ordinateur qui, lorsqu'il s'exécute sur un ordinateur, est configuré pour mettre en oeuvre un procédé selon l'une quelconque des revendications 1 à 8.

10. Support d'enregistrement stockant un programme d'ordinateur selon la revendication 9.

11. Ordinateur qui est configuré par un programme d'ordinateur selon la revendication 9 pour détecter une mystification de signaux de navigation de GNSS.

12. Dispositif (10) pour détecter une mystification de signaux de navigation de GNSS comprenant :

- un premier moyen (12) configuré pour calculer des différences doubles de phase $\nabla\Delta(\phi)$ à partir de différences de phase de porteuse mesurées $\Delta(\phi)$ de signaux de navigation reçus en provenance d'un premier satellite de GNSS et en provenance d'un second satellite de GNSS avec une première antenne et un premier récepteur et avec une seconde antenne et un second récepteur ;
- un second moyen (14) configuré pour calculer une statistique de test à partir de toutes les différences doubles de phase calculées ;
- un troisième moyen (16) configuré pour vérifier si la statistique de test reste ou non dans une plage définie par deux seuils définis pour la statistique de test sur une période de temps prédéfinie ; et
- un quatrième moyen (18) configuré pour détecter une mystification si la statistique de test reste dans la plage définie par les deux seuils pendant la période de temps prédéfinie.

13. Dispositif selon la revendication 12 qui est mis en oeuvre comme une installation de traitement de données externe distincte, qui est conçue pour recevoir des différences de phase de porteuse mesurées $\Delta(\phi)$ en provenance du premier récepteur et du second récepteur par l'intermédiaire d'une liaison de communication bidirectionnelle et pour envoyer en retour aux premier et second récepteurs un drapeau qui indique la présence d'une mystification.

14. Dispositif selon la revendication 12 qui est mis en oeuvre comme un module de traitement, qui est conçu pour recevoir des différences de phase de porteuse mesurées $\Delta(\phi)$ de signaux de navigation en provenance d'au moins deux récepteurs pour des signaux de navigation en provenance de satellites de GNSS et pour délivrer un drapeau qui indique la présence d'une mystification.

START

S10

receiving navigation signals from two
GNSS satellites with a first antenna
and a first receiver

S12

receiving navigation signals from two
GNSS satellites with a second antenna
and a second receiver

S14

measuring carrier phase
differences of the received
navgiation signals

S16

calculating phase double
differences from the measured
carrier phjase differences

S18

calculating a test statistic from all
calculated phase double
differences

S20

test statistic <
threshold1 and >
threshold2

Yes

No

S22

setting flag for
spoofing detected

Fig. 1

## Fig. 2

## Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2009195443 A1

### Non-patent literature cited in the description

- **MONTGOMERY, P. et al.** A Multi-Antenna Defense - Receiver Autonomous GPS Spoofing Detection. *Inside GNSS,* March 2009, http://www.insidegnss.com

- Civilian GPS Spoofing Detection based on Dual-Receiver Correlation of Military Signals. **MARK L PSIAKI et al.** GNSS 2011 - PROCEEDINGS OF THE 24TH INTERNATIONAL TECHNICAL MEETING OF THE SATELLITE DIVISION OF THE INSTITUTE OF NAVIGATION (ION GNSS 2011). THE INSTITUTE OF NAVIGATION, 23 September 2011, 2619
- **MONTGOMERY, P. et al.** A Multi-Antenna Defense - Receiver Autonomous GPS Spoofing Detection. *Inside GNSS,* 2009, http://www.insidegnss.com